# EUROPÄISCHE PATENTSCHRIFT

(11) **EP 0 889 927 B1**
(45) Veröffentlichungstag und Bekanntmachung des Hinweises auf die Patenterteilung: **04.06.2003**
(21) Anmeldenummer: 97920536.6
(22) Anmeldetag: 21.03.1997
(51) Int. Cl.: C08J 7/04, C08J 7/18, G02B 1/10

(54) **VERFAHREN ZUR ERZEUGUNG EINER HAFTFESTEN BESCHICHTUNG AUF POLYMETHYLMETACRYLAT (PMMA)-SUBSTRATOBERFLÄCHEN**
PROCESS FOR PRODUCING AN ADHESIVE COATING ON POLYMETHYL METHACRYLATE (PMMA) SUBSTRATE SURFACES
PROCEDE DE PRODUCTION D'UN REVETEMENT ADHESIF SUR DES SURFACES DE SUBSTRAT EN POLYMETHYLMETHACRYLATE (PMMA)

(30) Priorität: 27.03.1996 DE 19611936
(43) Veröffentlichungstag der Anmeldung: 13.01.1999
(73) Patentinhaber: Leica Microsystems Wetzlar GmbH, 35578 Wetzlar (DE); Leybold Optics GmbH, 63775 Alzenau (DE); Leica Camera AG, 35606 Solms bei Wetzlar (DE)
(72) Erfinder: GÖTZELMANN, Rainer, D-63456 Hanau (DE); GRÜNWALD, Heinrich, D-61194 Niddatal (DE); SCHEERER, Friedrich, D-35606 Niederbiel (DE); TERHÜRNE, Jörg, D-35390 Giessen (DE); ZÖLLER, Alfons, D-63628 Bad Soden-Salmünster (DE)
(74) Vertreter: Stamer, Harald
(86) Internationale Anmeldenummer: DE9700582
(87) Internationale Veröffentlichungsnummer: WO97035912

(56) Entgegenhaltungen:
- US-A- 5 007 928
- US-A- 5 015 523
- PATENT ABSTRACTS OF JAPAN vol. 007, no. 263 (C-196), 24.November 1983 & JP 58 147431 A (NIHON ITA GLASS KK), 2.September 1983,
- DATABASE WPI Section Ch, Week 9333 Derwent Publications Ltd., London, GB; Class A14, AN 93-261750 XP002039206 & JP 05 179 034 A (JAPAN SYNTHETIC RUBBER CO LTD) , 20.Juli 1993
- DATABASE WPI Section Ch, Week 8722 Derwent Publications Ltd., London, GB; Class A85, AN 87-154252 XP002039207 & JP 62 092 250 A (TDK CORP) , 27.April 1987
- PATENT ABSTRACTS OF JAPAN vol. 018, no. 201 (C-1188), 8.April 1994 & JP 06 001870 A (MITSUBISHI KASEI CORP), 11.Januar 1994,

## Beschreibung

Die Erfindung betrifft ein Verfahren zur Erzeugung einer haftfesten Beschichtung auf Polymethylmetacrylat (PMMA)-Substratoberflächen.

Neben Glas werden zunehmend transparente Kunststoffe zur Herstellung optisch abbildender Bauelemente, wie Linsen und Prismen, verwendet. Dabei hat sich insbesondere PMMA bewährt. Ein wesentlicher Nachteil der aus PMMA gefertigten optischen Teile ist ihre relativ weiche Oberfläche, die leicht durch Kratzer beschädigt werden kann. Es ist daher üblich, die Oberfläche durch Aufdampfen von Quarz (SiO₂) oder auch durch plasmapolymensierte Siliziumverbindungen zu schützen. Es ist auch möglich, die Oberflächen mit optischen Funktionsschichten, wie z. B. zur Reflexminderung, zu beschichten.

Aus Patent Abstracts of Japan zu JP 58-147431 ist ein Verfahren zum Aufbringen einer Schutzschicht auf eine PMMA-Oberfläche bekannt, bei dem zunächst durch Plasma-Polymerisation eine Unterschicht aus einer aromatischen Verbindung aufgebracht wird. Auf diese Schicht wird dann ebenfalls durch Plasma-Polymerisation eine Silizium-Verbindung als Schutzschicht aufgedampft. Das die Polymerisation erzeugende Plasma wirkt dabei in Gegenwart ausgewählter Gase auf die Silizium-Verbindung ein.

Aus Patent Abstracts of Japan zu JP 03-337947 ist ein Verfahren zur Oberflächenbehandlung eines Substrats aus PMMA bekannt, bei dem die Oberfläche zumindest unter Einsatz einer O- oder N-Atome enthaltenden ungesättigten Verbindung oder einer gasförmigen Mischung aus einer ungesättigten Verbindung und O₂ - oder N₂- Gasen einer Plasma-Polymerisations-Behandlung ausgesetzt wird. Dadurch entsteht auf der Oberfläche eine Plasma-Polymerisation-Membran, die die Oberfläche zumindest teilweise bedeckt. Die PMMA-Oberfläche wird dann noch in den polymerisierten und/oder freien Bereichen mit einer Membran aus einem anorganischen Oxid beschichtet. Das Verfahren wird insbesondere für Kontaktlinsen und andere medizinische Kunststoffpräparate mit stark hydrophilen Eigenschaften vorgesehen.

Aus US 5 015 523 ist ein Verfahren zum Aufbringen von abriebfesten Beschichtungen und Anti-Reflex-Beschichtungen auf Kunststofflinsen unter Verwendung einer haftvermittelnden Grundschicht bekannt. Als Grundierung werden Kopolymere von ausgewählten Monomeren verwendet, die als Lösung auf die Kunststoffoberfläche aufgebracht werden. Zuvor wird die Kunststoffoberfläche der Einwirkung eines Sauerstoff-Plasmas ausgesetzt, das eine Hydrophilierung der Oberfläche und damit eine verbesserte Benetzbarkeit zur Reinigung und Beschichtung mit der Grundierung erzeugt. In die getrocknete Grundschicht wird kolloidales Siliziumdioxid eingelagert. Auf diese Verschleißschicht können in üblicher Weise anorganische Anti-Reflex-Schichten aufgebracht werden.

Leider hat sich herausgestellt, daß die bisher gewählten Beschichtungen eine relativ geringe Haftfestigkeit aufweisen. Bei thermischer Beanspruchung lösen sich die Schichten oder es erfolgen Rißbildungen, die sich z. B. bei Brillenoptiken zwar noch nicht störend auswirken, die bei Feinoptiken aber nicht mehr tolerierbar sind. Insbesondere bei spritzgegossenen optischen Teilen ist die sogenannte Spritzhaut mechanisch stark beansprucht und zeigt eine schlechte Haftfähigkeit für aufgebrachte Beschichtungen.

Aus EP 0 482 615 A1 ist es bekannt, die Oberflächen von verschiedenen Polymer-Materialien mit einer Poly(hydroxyethyl acrylat)-Beschichtung zu versehen, die eine verbesserte Benetzbarkeit, Bedruckbarkeit, Haftfestigkeit, Antistatik und Beschlagfreiheit ergeben soll. Die spezielle Beschichtung soll durch einen der bekannten Polymerisationsprozesse erzeugt werden. Entsprechend den angegebenen Verfahrensparametern wird die zu beschichtende Oberfläche im Vakuum zunächst dem dampfförmigen Poly(hydroxyethyl acrylat) ausgesetzt und danach wird eine PlasmaEntladung ausgelöst, durch die die Beschichtung polymerisiert wird. Die Beschichtung stellt eine abschließende Behandlung der Polymer-Oberfläche dar.

Der Erfindung lag daher die Aufgabe zugrunde, ein Verfahren zur Erzeugung einer Beschichtung auf PMMA-Oberflächen anzugeben, die gegenüber thermischen und mechanischen Spannungen widerstandsfähig, optisch weitgehend neutral und auch bei spritzgegossenen Teilen festhaftend ist. Die Beschichtung sollte darüber hinaus selbst wieder mit optischen Funktionsschichten beschichtbar sein.

Diese Aufgabe wird bei einem Verfahren der eingangs genannten Art erfindungsgemäß durch die Merkmale des Anspruchs 1 gelöst. Vorteilhafte Weiterbildungen ergeben sich aus den Merkmalen der Unteransprüche.

Ein wesentlicher Gedanke der Erfindung liegt darin, eine auf PMMA fest haftende Beschichtung vorzusehen, die selbst als haftvermittelnde Zwischenschicht für weitere Beschichtungen dient. Als Beschichtungssubstanz werden radikalisch polymerisierbare organische Ausgangsverbindungen gewählt, die üblicherweise als Monomere bezeichnet werden. Diese werden erfindungsgemäß durch von einem Plasma erzeugte Startradikale zur Polymerisation gebracht. Es handelt sich also um eine plasmainduzierte Polymerisation.

Das Verfahren der Anlagerung von Monomeren an andere Makromoleküle durch Polymerisation ist an sich bekannt und wird auch als Pfropfpolymerisation bezeichnet. In dem Lehrbuch MAKROMOLEKÜLE, Hans-Georg Elias, 3. Auflage, (1975), Seiten 680-683, werden Beispiele für reaktive Gruppierungen angegeben. Daraus ist auch zu entnehmen, daß Radikale die Polymerisation auslösen können und Polymere z. B. durch UV-Strahlung oder γ-Strahlung aktiviert werden können.

In überraschender Weise hat sich nun gezeigt, daß eine durch Plasma induzierte Polymerisation von Monomeren auf PMMA zu einer sehr fest haftenden und haftvermittelnden Beschichtung führt, die geeignet ist, mechanische Spannungen in den Grenzflächen auszugleichen. Die zu beschichtende PMMA-Substratoberfläche und die reaktiven Ausgangsverbindungen für die Beschichtung (Monomere) werden nur kurzzeitig dem Plasma ausgesetzt. Dabei hat sich ein Niederdruckplasma als besonders geeignet erwiesen Die Zeitdauer und der Zeitpunkt der Plasmaeinwirkung hängen von der Beschichtungsart und der Schichtdicke des verwendeten Monomers ab und können durch Versuche optimiert werden.

Die Beschichtung der aus PMMA gefertigten optischen Teile mit einer plasmainduzierten Polymerisation eines Monomeren verändert die optische Qualität der Oberfläche präzisionsoptischer Teile nicht und ermöglicht mit Vorteil eine nachfolgende Beschichtung mit optischen und mechanischphysikalischen Funktionen, wie Anti-Reflex-, optischer Teiler-, Spiegel-, dichroitische und dielektrische Schichten sowie Abrieb- und Verschleißschichten oder Schichten zur Erhöhung der Klimabeständigkeit.

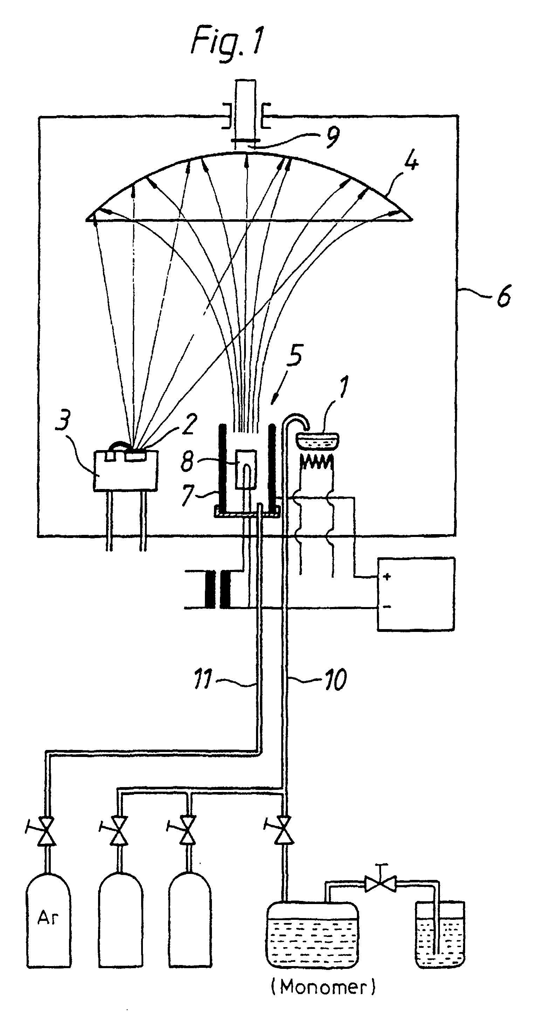

In der Figur ist eine geeignete Beschichtungsanlage schematisch dargestellt. Sie wird nachfolgend im Zusammenhang mit beispielhaft angegebenen Beschichtungsabläufen beschrieben.

Eine handelsübliche Aufdampfanlage, z. B. vom Typ APS 1104 der Fa. Leybold Systems, enthält einen elektrisch beheizten Verdampfer mit einem Molybdän-Tiegel 1 und einen Elektronenstrahlverdampfer 3 mit einem Verdampfertiegel 2. Den Verdampfern gegenüberliegend befindet sich ein drehbarer, kalottenförmiger Substrathalter 4, in den z. B. spritzgegossene Linsen eingelegt sind. Zur Plasmaerzeugung dient eine lonenquelle 5 des Typs APS (Advanced Plasma Source) mit einer zylinderförmigen Anode 7 und einer Kathode 8. Alle Funktionselemente sind in einer Vakuumkammer 6 angeordnet, die über einen nicht dargestellten Diffusionspumpstand auf den gewünschten Betriebsdruck evakuiert werden kann. Ebenfalls nicht dargestellt sind ausschwenkbare Schutzschilde vor dem Elektronenstrahlverdampfer 3 und der lonenquelle 5 zur steuerbaren Unterbrechung der durch Pfeile dargestellten Emissionen.

Mit dem Substrathalter 4 ist noch ein Schwingquarzmeßsystem 9 zur Messung der geometrischen Dicke der auf das Substrat aufgebrachten Schichten gekoppelt.

Bei einem Ausführungsbeispiel wurde der Molybdän-Tiegel 1 mit ca. 5 ml des Monomers Dicthylenglykolbis-Alkylcarbonat gefüllt, das vernetzte, im sichtbaren weitgehend transparente Schichten bildet und mit zwei polymerisationsfähigen Gruppen pro Molekül ausgestattet ist.

Der Siedepunkt dieses Monomers liegt mit 160°C bei 2 Torr Druck recht hoch und muß daher im Vakuum mit einem thermischen Verdampfer verdampft werden. Das hat aber den Vorteil, daß die auf den zu beschichtenden Substratoberflächen kondensierte Flüssigkeitsschicht im Vakuum stabil bleibt und nicht nennenswert desorbiert.

Der Einsatz anderer, aus der konventionellen Polymerchemie bekannter Monomere ist möglich, wie z. B. Vinyl-, Ethinyl-, Nitril- oder Epoxiverbindungen. Diese können in Vorratstanks außerhalb der Vakuumkammer 6 gelagert und evtl. zusammen mit Stabilisatoren über eine Fülleitung 10 in den Tiegel 1 gebracht werden. Monomere mit mindestens einer C-C-Doppel- oder -Dreifachbindung oder einer C-N-Dreifachbindung haben sich als vorteilhaft erwiesen.

In den Verdampfertiegel 2 wurde kommerziell übliches SiO₂-Granulat eingelegt. Damit konnte zusätzlich zu der erfindungsgemäßen Beschichtung auch noch eine Kratzfestigkeitsschicht aus Quarz aufgebracht werden.

Die Vakuumkammer wurde auf einen Druck von etwa 5. 10⁻⁵ mbar evakuiert und danach Argon bis zu einem Druck von 10⁻⁴ mbar eingelassen. Das Argon befindet sich in einer Vorratsflasche außerhalb der Vakuumkammer und wird über eine Fülleitung 11 üblicherweise direkt in die lonenquelle 5 eingeleitet, in der es als Plasma-Entladungsgas dient.

Als Entladungsgase werden bevorzugt Edelgase verwendet, aber auch andere anorganische Permanentgase wie z. B. Stickstoff oder Mischungen mit Edelgasen können eingesetzt werden.

Durch Anlegen einer Spannung von etwa 150 V an die Kathode 8 wurde ein Niederdruckplasma gezündet, das sich von der Kathode 8 aus bis zum Substrathalter 4 ausbreitet. Der Entladestrom beträgt hierbei zwischen 30 und 60 A. Nach etwa 15 sec wurde das Plasma ausgeschaltet und der Tiegel 1 auf eine Temperatur hochgeheizt, bei der das Monomer verdampft und sich auf den im Substrathalter 4 gehaltenen Linsenoberflächen niederschlägt. Die typische Anschaltdauer des Plasmas zur Induzierung der Polymerisation beträgt zwischen 5 bis 30 sec.

Durch das Plasma werden auf den Linsenoberflächen aufgrund der Kollision von lonen und/oder elektronisch hoch angeregten Atomen und Molekülen und/oder der Einwirkung von UV-Strahlen Startradikale erzeugt, die die Monomere zur Polymerisation bringen. Die erzeugte Polymerschicht wird kovalent an die Polymerketten der zu beschichtenden Teile gebunden. Das ist die Grundvoraussetzung für die sehr gute Haftfestigkeit.

Durch erneute Zündung des Argonplasmas über einen längeren Zeitraum von etwa 1 bis 60 min Dauer kann erreicht werden, daß die bereits anpolymerisierte Schicht weiter polymerisiert. Das führt zu einer erhöhten Vernetzungs- und Pfropfdichte mit der Substratoberfläche.

Besonders vorteilhaft ist es, wenn gleichzeitig mit der zweiten Plasmazündung z. B. die SiO₂-Schutzschicht aufgedampft wird. Dies erzeugt eine verstärkte Anbindung der SiO₂-Schicht an die polymerisierte Monomerschicht. Es konnte dabei beobachtet werden, daß das Plasma mit seiner UV-Strahlung auch durch eine bereits geschlossene SiO₂-Schicht hindurch noch eine andauernde Aktivierung der Polymerisation durch Erzeugung von Radikalen bewirkt. Der Erfolg äußert sich in einer zunehmenden Aushärtung der Schicht.

Alternativ zum Verdampfen ist es möglich, die Monomerverbindungen in flüssiger Form auf die Substratoberfläche aufzubringen, wie z. B. durch Spritzen, Schleudern, Kondensieren. Die Monomer-Flüssigkeitsschicht kann dann anschließend unter Einwirkung eines Niederdruckplasmas durchpolymerisiert werden. Dieses Vorgehen hat den Vorteil, daß die aufgetragene Monomerschicht einen Schutz der empfindlichen Substratoberfläche vor dem Plasma bewirkt, so daß auch mit höherer Plasmaintensität und -dauer gearbeitet werden kann. Das bedeutet außerdem, daß auch dickere Schichten von einigen hundert nm als haftvermittelnde Polymerschicht erzeugt werden können.

Eine aus PMMA hergestellte Linse wurde mit der haftvermittelnden polymerisierten Monomerschicht und einer Quarz-Schutzschicht versehen und einem Schwitzwasser-, mehreren Lösungsmittel- und einem Kältetest im Vergleich zu einer direkt mit Quarz beschichteten PMMA-Linse unterzogen Bei dem erfindungsgemäßen Verfahren zeigten sich auch bei mikroskopischer Untersuchung keine Ablösungen, Rißbildungen oder Vergrauungen, während die konventionell erzeugte Schutzschicht abblätterte.

## Patentansprüche

1. Verfahren zur Erzeugung einer haftfesten Beschichtung mit optischen und/oder mechanischen Funktionen auf einer Polymethylmethacylat (PMMA)-Substratoberfläche, **dadurch gekennzeichnet, daß**
(a) die Substratoberfläche durch kurzzeitige, bis zu etwa 30 sec andauernde, Einwirkung eines Niederdruckplasmas radikalisiert wird, daran
(b) anschließend eine radikalisch polymerisierende organische Verbindung (Monomer) als haftvermittelnde Schicht aufgebracht wird, und
(c) anschließend an die durch das Zusammenwirken der Schritte (a) und (b) ausgelöste radikalisch induzierte Polymerisation der haftvermittelnden Schicht die Beschichtung mit der optischen und/oder mechanischen Funktion erfolgt.

2. Verfahren zur Erzeugung einer haftfesten Beschichtung mit optischen und/oder mechanischen Funktionen auf einer Polymethylmethacrylat (PMMA)-Substratoberfläche, **dadurch gekennzeichnet, daß**
(a) eine radikalisch polymerisierende organische Verbindung (Monomer) als haftvermittelnde Schicht aufgebracht wird, daran
(b) anschließend diese Schicht durch kurzzeitige, bis zu etwa 30 sec andauernde, Einwirkung eines Niederdruckplasmas radikalisiert wird, und
(c) anschließend an die durch das Zusammenwirken der Schritte (a) und (b) ausgelöste radikalisch induzierte Polymerisation der haftvermittelnden Schicht die Beschichtung mit der optischen und/oder mechanischen Funktion erfolgt.

3. Verfahren nach einem der Ansprüche 1 oder 2, **dadurch gekennzeichnet, daß** die Beschichtung mit der optischen und/oder mechanischen Funktion unter gleichzeitiger Einwirkung eines erneut gezündeten Plasmas erfolgt.

4. Verfahren nach einem der vorhergehenden Ansprüche, **dadurch gekennzeichnet, daß** für die haftvermittelnde Schicht ein mono-, dioder trifunktionelles Monomer gewählt wird.

5. Verfahren nach einem der vorhergehenden Ansprüche, **dadurch gekennzeichnet, daß** die haftvermittelnde Schicht aufgedampft wird.

6. Verfahren nach einem der vorhergehenden Ansprüche, **dadurch gekennzeichnet, daß** als Beschichtung mit mechanischer Funktion eine SiO₂-Schicht verwendet wird.

## Claims

1. Method of producing an adhesive coating with optical and/or mechanical functions on a polymethylmethacrylate (PMMA) substrate surface, **characterised in that**
(a) the substrate surface is radicalised by brief - lasting up to approximately 30 seconds - action of a low-pressure plasma,
(b) subsequently thereto a radical polymerising organic compound (monomer) is applied as a bonding layer and
(c) subsequently to the radically induced polymerisation of the bonding layer triggered by the co-operation of steps (a) and (b) the coating with the optical and/or mechanical function is carried out.

2. Method of producing an adhesive coating with optical and/or mechanical functions on a polymethylmethacrylate (PMMA) substrate surface, **characterised in that**
(a) a radical polymerising organic compound (monomer) is applied as a bonding layer,
(b) subsequently thereto this layer is radicalised by brief - lasting up to approximately 30 seconds - action of a low-pressure plasma and
(c) subsequently to the radically induced polymerisation of the bonding layer triggered by the co-operation of steps (a) and (b) the coating with the optical and/or mechanical function is carried out.

3. Method according to one of claims 1 and 2, **characterised in that** the coating with the optical and/or mechanical function is carried out with simultaneous action of a newly ignited plasma.

4. Method according to one of the preceding claims, **characterised in that** a monofunctional, difunctional or trifunctional monomer is selected for the bonding layer.

5. Method according to one of the preceding claims, **characterised in that** the bonding layer is vapour-deposited.

6. Method according to one of the preceding claims, **characterised in that** an SiO₂ layer is used as coating with mechanical function.

## Revendications

1. Procédé de production d'un revêtement adhésif avec des fonctions optiques et/ou mécaniques sur une surface de substrat en polyméthylméthacrylate (PMMA), **caractérisé en ce que**
(a) la surface du substrat est radicalisée par l'action de courte durée, durant jusqu'à environ 30 secondes, d'un plasma basse pression, puis
(b) ensuite, un composé organique (monomère) à polymérisation radicalaire est appliqué en tant que couche provoquant l'adhésivité et
(c) à la suite de la polymérisation induite par les radicaux déclenchée par la coopération des étapes (a) et (b) de la couche provoquant l'adhésivité se produit le revêtement avec la fonction optique et/ou mécanique.

2. Procédé pour la production d'un revêtement adhésif avec des fonctions optiques et/ou mécaniques sur une surface de substrat en polyméthyleméthacrylate (PMMA), **caractérisé en ce que**
(a) un composé organique à polymérisation radicalaire (monomère) est appliqué en tant que couche provoquant l'adhésivité et
(b) ensuite cette couche est radicalisée par l'action de courte durée, durant jusqu'à environ 30 secondes, d'un plasma basse pression, et
(c) à la suite de la polymérisation induite par les radicaux déclenchée par la coopération des étapes (a) et (b) de la couche permettant l'adhésivité, le revêtement avec la fonction optique et/ou mécanique se produit.

3. Procédé selon l'une des revendications 1 ou 2, **caractérisé en ce que** le revêtement avec la fonction optique et/ou mécanique se produit sous l'action simultanée d'un plasma nouvellement allumé.

4. Procédé selon l'une quelconque des revendications précédentes, **caractérisé en ce que** pour la couche permettant l'adhésivité, on choisit un monomère mono-, di- ou trifonctionnel.

5. Procédé selon l'une quelconque des revendications précédentes, **caractérisé en ce que** la couche permettant l'adhésivité est métallisée sous vide.

6. Procédé selon l'une quelconque des revendications précédentes **caractérisé en ce que** en tant que revêtement ayant une fonction mécanique, on utilise une couche de SiO₂.
